(19) Europäisches Patentamt
European Patent Office
Office européen des brevets

(11) Publication number: **0 007 792**
**B1**

(12) # EUROPEAN PATENT SPECIFICATION

(45) Date of publication of patent specification: **26.01.83**

(51) Int. Cl.³: **C 08 F 212/14,**
C 08 F 8/00, B 01 J 41/12

(21) Application number: **79301463.0**

(22) Date of filing: **24.07.79**

(54) **Synthetic polymeric adsorbents and ion exchange resins, their production and processes using them.**

(30) Priority: **24.07.78 US 927221**

(43) Date of publication of application:
**06.02.80 Bulletin 80/3**

(45) Publication of the grant of the patent:
**26.01.83 Bulletin 83/4**

(84) Designated Contracting States:
**DE FR GB IT NL**

(56) References cited:
**US - A - 3 586 644**
**US - A - 3 997 706**
**US - A - 4 093 567**

(73) Proprietor: **Rohm and Haas Company**
**Independence Mall West**
**Philadelphia, Pennsylvania 19105 (US)**

(72) Inventor: **Reed, Samuel Franklin, Jr.**
**49 Brookside Drive**
**Holland, PA 18966 (US)**

(74) Representative: **Angell, David Whilton et al,**
**Rohm and Haas Company Patent Department**
**Chesterfield House Barter Street**
**London WC1A 2TP (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 007 792 B1

# Synthetic polymeric adsorbents and ion exchange resins, their production and processes using them

This invention is concerned with synthetic polymeric adsorbents and ion exchange resins, methods of preparing them and catalysts, adsorption processes using them, for example water-treatment processes, processes for the recovery of organic materials from gaseous and other streams and pharmaceutical purification processes.

Adsorbents are usually solids which exhibit selectivity at their surface for substances in a fluid mixture, thereby providing a means of separating such substances from the mixture. The high surface area characteristic of adsorbents (usually well above 5 $m.^2/g$ of solid) normally results from a fine state of subdivision (non-porous adsorbents) or from pores in the adsorbent particles (porous adsorbents). Carbon black and $TiO_2$ and ZnO pigments are examples of non-porous adsorbents. Granular carbon, silica gel, bone char, certain soils and asbestos are examples of well-known porous adsorbents obtained from naturally occurring materials. For separation or purification of complex substances (such as pharmaceuticals) synthetic polymeric adsorbents have been developed, some of which serve also as ion exchange materials or as intermediates for the manufacture of ion exchange materials. However, ion exchange is an adsorption as well as an adsorption phenomenon, so that although all ion exchange materials are adsorbents, the converse is not necessarily true.

Synthetic adsorbents are usually porous polymeric solids, polystyrene and styrene-divinylbenzene copolymers being representative. Although it is possible to prepare fine particle size synthetic polymers directly or by grinding larger particle size polymers to a fine particle size to obtain high surface area, fine particle size adsorbents cannot be used in cyclic processes, particularly processes involving adsorbent beds in columns, since the fine particles pack too tightly and impede fluid flow. Adsorbents of moderately large particle size, about 0.02 mm. to 2 mm. diameter or greater, are therefore required. Polymeric beads, obtained by known suspension polymerization techniques, have a convenient particle size for use in columnar operations. Nevertheless, although the polymeric adsorbents can be made hydrophobic and the bead form enhances the usefulness of the polymeric adsorbents, their adsorbent properties have been somewhat unattractive in comparison with the carbonaceous adsorbents obtained from the pyrolysis of organic materials. However, the latter tend to suffer from high moisture pick up in humid atmospheres, from poor reproducibility during manufacture, and from such fine pores and rigid structure as to make them vulnerable to cracking, splitting and decripitation under high osmotic pressures such as are often encountered in cyclic operations.

The preferred resins of this invention have a good balance of the desirable properties of these prior art resins and avoid their most serious deficiencies. In this regard, even though certain of the adsorbents of this invention may lack the extremely high surface areas of the known polymeric adsorbents or activated carbon adsorbents, they may still equal their performance, especially in adsorption capacity for organic liquids at high concentration.

The adsorbents of the invention are polymeric materials in macroreticular bead form which, when functionalised, form ion exchange resins of the invention. The beads are produced by swelling lightly crosslinked macroreticular aromatic polymer beads containing 0.25 to 20% by weight crosslinker units in an inert organic solvent, and then post-crosslinking the polymer by contacting the swollen beads with one or more of the following crosslinkers: polyfunctional alkylating or acylating agents and sulfur halides. A Friedel-Crafts type acid catalyst is used for the post-crosslinking. Typically, the adsorbents have surface areas in the range of about 100—1400 $m^2/g$ and posorities of at least 0.2 $m^3/m^3$, more usually 0.3—0.6.

The adsorbents are called "macronets" because the crosslinks are stable and have a long and rigid structure. Such structure results from post-crosslinking swollen lightly crosslinked polymer substrates, the swollen state causing displacement of the polymer chains to significant distances from each other. The use of macroreticular polymer substrates as the beads for swelling and cross-linking in the invention greatly enhances the porosity and adsorbent properties of the products. The term "macronet" has previously been used to describe the ion exchange functionalized polystyrene and styrene-divinylbenzene copolymer macromolecules obtained by crosslinking linear polystyrene in solution or styrene polymers in the swollen state by reaction with an alkylating agent under Friedel-Crafts conditions, as described in U.S. Patent 3,729,457 and in related articles in *The Journal of Polymer Science,* Symposium No. 47, pages 95—101 and 189—195 (1974). Similar ion exchange resin products are disclosed in British Patent 1,095,746 wherein polystyrene or a styrene derivative in a swollen pearl form undergoes crosslinking by acylation under Friedel-Crafts conditions. In these prior art reactions, a macronet product is obtainable but the use of the macroreticular polymer bead form is not contemplated. The use of this macroreticular form in this invention gives products of better performance and enhanced economy.

The term "macroreticular" (as opposed to "microreticular") is well known in the art and depicts porous adsorbents in which the pores are larger than atomic distances and are not part of the polymer structure per se. Rather, the pores are microscopic channels and in most cases they result from the formation of the polymer beads in a suspension polymerization in the presence of a phase extender which acts as a solvent for the monomer mixture is chemically inert under the polymerization

conditions and exerts so little solvating action on the product polymer that phase separation of the product polymer takes place. This results in "squeezing out" of the organic precipitant (phase extender) from the copolymer mass. As a consequence, the pore structure is not dependent upon ambient conditions and therefore is retained despite contact with various concentrations of electrolyte, solvent and exchangeable ions. In "microreticular" (gel-type) adsorbents the "pores" are not true pores being extremely small, usually below $30 \times 10^{-10}$m in diameter, and will disappear from the polymer structure when the polymer is dried. Because the pores of macroreticular resins are relatively large and are not greatly influenced by changes in ambient conditions, the macroreticular polymers are able to withstand large osmotic pressure variations commonly encountered in cyclic processes. Moreover, their moderately large particle size makes them especially useful in operations utilizing columns particularly in their ion exchange form, where the molecular weight of an ionic species to be exchanges is so high as to exclude use of gel-type ion exchange resins. Macroreticular polymers for ion exchange resin use are described in the techinical literature, as in U.S. Patents 3,037,052, 3,637,535 and 3,843,566.

The lightly crosslinked macroreticular aromatic copolymer beads used in forming the macronet adsorbents and ion exchange resins of the invention are a well known class of materials as exemplified in the U.S. patents just listed and in other patents and publications, and many are commercially available. Accordingly, only a brief description of these materials is necessary.

In summary, the macroreticular substrate polymers are lightly crosslinked copolymers usually of (1) polyunsaturated monomer, containing a plurality of non-conjugated

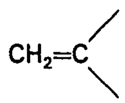

groups, which acts as a crosslinking agent, and (2) monoethylenically unsaturated monomer. At least one of the polyunsaturated and monoethylenically unsaturated monomers is usually aromatic, and preferably both are aromatic, provided that a major proportion of the copolymer (at least 50% by weight) comprises aromatic units. For light crosslinking, sufficient of the polyunsaturated monomer will be used to give dimensional stability to the copolymer bead so that it will swell rather than dissolve in the subsequent swelling stap. The amounts of such crosslinking monomers are from 0.25 to 20% by weight of the monomer mixture, preferably closer to the lower end of this range, for example 0.5 to 8% and more usually 1—4%. The preferred polyunsaturated monomers include divinylbenzene and trivinylbenzene and the preferred monoethylenically unsaturated monomers include styrene, the o, m, and p-methyl styrenes, the o, m, and p-ethyl styrenes, ethylvinylbenzene, vinylnaphthalene and vinyltoluene. While hydrocarbon monomers are preferred, the monomers may also include heterocyclic compounds such as divinylpyridine. Among the suitable aliphatic polyunsaturated monomers may be mentioned diacrylates and dimethylacrylates, such as ethylene glycol diacrylate, ethylene glycol dimethacrylate, trimethylolpropane trimethacrylate, neopentyl glycol dimethacrylate, divinylketone, divinyl sulfide, allyl acrylate, diallyl maleate and diallyl fumarate. Suitable monoethylenically unsaturated aliphatic monomers include esters of acrylic acid, such as methyl, ethyl and propyl acrylate, and the corresponding esters of methacrylic acid, wherein the ester group contains 1—10 carbon atoms. The preferred macronet adsorbents of the invention are based on macroreticular copolymers of styrene and divinylbenzene (about 99—80 wt. % styrene, balance divinylbenzene) and copolymers of styrene (about 40—60 wt. %), vinylbenzyl chloride (about 40—60 wt. %) and divinylbenzene (about 1—20 wt. %). The foregoing ranges are on the basis of 100% active monomers. When commercial grades of divinylbenzene are used, about 20—50% of the divinylbenzene is ethylvinylbenzene and it is conventional to include the ethylvinylbenzene with the styrene or other monovinyl monomer when specifying the proportion of styrene or other monovinyl monomer. The polymers may contain minor amounts of other monomers, such as about 1—4% by weight of acrylonitrile.

As mentioned above the macroreticular polymers are most usually prepared under suspension polymerization conditions utilising a free radical catalyst and a liquid precipitant (phase extender) which acts as a solvent for the monomer mixture and which is present in such amount as to exert such small solvating action on the product crosslinked polymer that phase separation of the product copolymer takes place as evidenced by the fact that the product copolymer is no more than semi-transparent and is preferably opaque when associated with a fluid having a different refractive index. The precipitant is chemically inert under the polymerization conditions and its selection will be determined by the character of the monomers in the monomer mixture. When employing the preferred aromatic hydrocarbon monomers of the invention, such as styrene, divinylbenzene and ethylvinylbenzene, alone or with vinylbenzyl chloride, the precipitant may be an alkanol containing 4—10 carbon atoms, such as methylisobutylcarbinol, or it may be a saturated aliphatic hydrocarbon containing at least 7 carbon atoms, such as heptane, isooctane and cyclohexane.

When suspension polymerization is the polymerization method used, the precipitant must be either immiscible or only partially miscible with the suspending medium.

Other monomer compositions from which the macroreticular copolymers may be formed are

described in US. Patent 3,991,017 and in U.S. Patents 3,275,548 and 3,357,158 and British Patents 932,125 and 932,126.

After formation of the macroreticular polymer the polymer is swollen in an inert organic solvent. Optionally the swelling and polymerization process may be carried out simultaneously if the precipitant is a swelling solvent. A variety of solvents and solvent mixtures may be used as swelling solvent, including chlorinated hydrocarbons such as chlorobenzene, ethylene dichloride, perchloroethylene, propylene dichloride, and dichlorobenzene; aliphatic hydrocarbons, such as hexane, isooctane and petroleum ether; nitro paraffins such as nitro propane; nitro aromatics such as nitro benzene; and miscellaneous solvents such as carbon disulfide. Ethylene dichloride is the preferred solvent.

While the copolymer is in the swollen state and is in the swelling solvent, the crosslinking is carried out, conveniently by adding Friedel-Crafts catalyst and crosslinking agent and heating the mixture to 40—100°C. or higher (depending on the boiling point of the solvent) for 1 to 24 hours. Other reaction temperatures and times may be used, depending upon the reactive species and catalyst in the reaction mixture. Following reaction, the reaction mixture may be quenched with water or a lower alkanol such as methanol, or acetone, or by inverse aqueous quenching and the product macronet polymer beads separated by thorough washing with suitable solvents and drying.

Friedel-Crafts polyfunctional alkylating agents give the best products but useful macronet adsorbents are also prepared with Friedel-Crafts polyfunctional acylating agents and with inorganic sulfur halides. The suitable polyfunctional alkylating agents include polyhalides, polyols and polyolefins, such as $\alpha,\alpha$-dichloro-p-xylene, polyvinyl chloride, methylene chloride, chloromethyl methyl ether, bis(chloromethyl)benzene, bis 1,4-chloromethyl biphenyl, bis(chloromethyl)thiophene, 1,4-dichlorohexane, 1,4-dichlorobutane, chloroform, carbon tetrachloride, paraldehyde, alkylene glycols such as ethylene glycol, diepoxides and polybutadienes. It will be apparent that the alkylating agents may contain aromatic groups provided the atoms of the alkylating agents which bond to the macroreticular polymer are aliphatic carbon atoms.

The difunctional acylating agents preferably are aromatic compounds but aliphatic compounds are also useful. Generally, the acylating agents are diacid chlorides although polyesters and polyamides are also useful. In the case of the aromatic diacid chlorides, the carbonyl groups must be separated by at least one carbon atom. For example, while suitable aromatic diacid chlorides include terephthaloyl chloride and isophthaloyl chloride, ortho-phthaloyl chloride would not be suitable since it tends to form anthraquinone rings which in turn participate in redox reactions.

Other suitable acylating agents include 1,4-naphthoyl dichloride, 1,5-naphthoyl dichloride, 1,6-naphthoyl dichloride, anthracene-1,5-diacid chloride, anthracene-1,9-diacid chloride, chlorofumaric acid, dichloromaleic acid, and the dichlorides of malonic, succinic, adipic and sebacic acids. Still other acylating agents include phosgene and thiophosgene. The inorganic sulfur halide crosslinkers are liquids under the reaction conditions and include sulfur monochloride, sulfur dichloride and the corresponding bromides.

Any Friedel-Crafts type catalyst may be utilised to catalyze the reaction, such as acidic metal halides, including aluminum chloride, stannic chloride (preferred), aluminum bromide, boron fluoride, zinc chloride and ferric chloride. The swelling solvent and the solvent selected for the reaction medium, if an additional solvent is used, may be the same or different but should be solvents which will not deactivate the Friedel-Crafts catalyst. The swelling solvents set forth above have this character. From about 0.001% to about 5% by weight of catalyst based on polymeric substrate will be effective, but the optimum amount of catalyst will depend upon the reactants and conditions of the reaction.

The crosslinking agent added to the reaction mixture effects "external" (sometimes called "secondary") crosslinking, as contrasted with crosslinking which may occur internally between monomers in the polymer backbone which will crosslink in the presence of a Friedel-Crafts catalyst. One such monomer is vinylbenzyl chloride. The combination of external and internal crosslinking is also a preferred feature of the polymers in the invention, as demonstrated hereinafter.

If desired, the macronet adsorbents may be converted to ion exchange resins by known techniques. For example, the adsorbents may be converted to weak base resins by chloromethylation (if not based on vinylbenzene chloride) and then aminolysis with dimethylamine, or to strong base resins by chloromethylation (if required) and then amination with trialkyl amines such as trimethylamine. Likewise, certain of the adsorbents may be converted to acidic cation exchange resins by sulfonation or phosphorylation. It will be understood that the more highly crosslinked the macronets the less useful are they likely to be as intermediates for ion exchange resin formation. However, if the crosslinking agents are aromatic or otherwise provide bulky crosslinks, the macronets products may still exhibit good ion exchange capacity upon functionalization to ion exchange form, even though highly crosslinked. Accordingly, a balance is required between crosslinking density and crosslink bulk for use of the macronets in ion exchange resin formation. Functionalizing of polymeric adsorbents to form ion exchange resins is well-known and therefore requires no further elaboration. The patents listed above provide good description of ion exchange resin formation. One form each of adsorbent and ion exchange resins of the invention results when the macronet adsorbents are used as substrates in the formation of hybrid copolymers and ion exchange resins in accordance with U.S. Patent 3,991,017. Briefly, in forming hybrid copolymers and ion exchange resins, a liquid monomer mixture containing a

B. Preparation of macronet beads

To a 1 $dm^3$, 3-necked flask fitted with mechanical stirrer, reflux condenser connected to a water scrubber, thermometer, and heating mantel was charged 31.2 g of the macroreticular copolymer beads of Part A, 26.25 g $\alpha,\alpha$-dichloro-p-xylene, and 0.3 $dm^3$ of ethylene dichloride. After standing about two days, the beads swelled to more than twice their initial volume. Then 54.0 g stannic chloride in 0.05 $dm^3$ of ethylene dichloride was added and the mixture heated to reflux for a period of 7.5 hours. On cooling, the reaction was quenched by dropwise addition of 0.3 $dm^3$ acetone with external cooling in a tap water bath. The solvents were removed by stick filtration, and the resin washed three times each with acetone, water, 10% HCl, water, and acetone. The product beads were then air dried followed by oven drying at 80°C for 16 hours (yield=45.0 g). Analysis: 3.99% Cl, surface area=1350 $m^2/g$, porosity=0.3638 cc/cc.

Example 2

Substantially as described in Example 1, 31.2 g of commercially availably macroreticular copolymer beads (S/DVB, 97/3) and 26.25 g $\alpha,\alpha$-dichloro-p-xylene swollen (20 hours) in 0.25 $dm^3$ ethylene dichloride was treated with 54.0 g stannic chloride in 0.05 $dm^3$ of ethylene dichloride and heated to reflux for 8.5 hours. Following quench, wash and isolation 46.1 g of oven dried beads were obtained. Analysis: 1.66% Cl, surface area=445 $m^2/10^{-3}$ kg, porosity=0.3456 cc/cc.

Example 3

Substantially as described in Example 1, to 25 g of macroreticular copolymer beads (S/DVB/AN, 96/2.0/2.0, phase extended with 28 vol. % MIBC) was added a solution of 14 g commercial PVC in 0.25 $dm^3$ EDC. The mixture was heated for 16 hours, the swollen beads cooled, treated with 31.3 g of anhydrous $AlCl_3$, heated after 2 hours at 25°C to reflux and maintained at 83°C for 5 hours. The reaction was quenched as in Example 1, producing a product with a surface area of 191 $m^2/g$.

Example 4

Substantially as described in Example 1, 106 g of macroreticular resin beads (S/DVB/AN, 96/2.0/2.0, phase extended with 51.3 vol. % toluene) was swelled over about 12 hours in a 2 $dm^3$, 3-necked flask with 1030 ml. of EDC. The flask was mounted in a toxic material hood and equipped with a condenser, Teflon blade stirrer, $N_2$ inlet, two Claisen heads, two addition funnels and caustic CME scrubbers. CME (106 g., 1.32 mole) was added and the mixture was stirred for 45 min. at ambient temperature (ca 20°C). The mixture was then cooled to 0°C. After an additional 50 min at 0°C, 0.116 $dm^3$ (1 mole) of $SnCl_4$ was added over a 20 min period, whereupon the mixture slowly turned black. The mixture was warmed to 25°C and stirred for 3 hours. It was then heated to reflux (85°C) and maintained at that temperature for 5 hours, then cooled and stirred overnight. The mixture was chilled to 0°C and 0.5 $dm^3$, of MeOH was added slowly at 0°C over 2.5 hrs. to quench the reaction. The resin was stick filtered and treated successively with 0.5 $dm^3$, MeOH, and 0.5 $dm^3$ of 1*N* NaOH (cloudy supernatant), stick filtered and washed with water (resin pH=11). Standard CME cleanup procedures (caustic wash) were used on filtrate solutions. The resin was backwashed in a graduate cylinder, then washed on a Buchner funnel with 1*N* HCl, deionized water (twice), 1:1 MeOH/water, and MeOH. After air and vacuum drying (50°C) the yield was 140.4 g (112% of theoretical). Microscopic examination showed clear dark amber, mainly whole beads, SA=733 $m^2/g$.

Example 5—32

Table I below summarizes the compositions, reaction conditions and product characteristics of Examples 1—4 as well as other preparations prepared substantially as described in Examples 1—4 with the changes indicated in the table. In all of the examples the extent of crosslinking of the macroreticular starting materials corresponds to the amount of crosslinking monomer. Thus, in Example 1, the MR composition is crosslinked to the extent of about 1% since the DVB is about 50% active, i.e. 0.5% of the composition. The analyses indicate the extraordinary adsorbency of the products since surface areas and porosities greatly exceed the 5 $m^2/g$ and 0.2 requirements for usefulness, respectively.

crosslinking monomer is added to an aqueous suspension of the macronet adsorbent, which liquid monomer mixture is imbided into the pores of the macronet adsorbent and is polymerized therein. The resulting hybrid product may then be converted to an ion exchange resin by appropriate functionalization in the conventional manner. If the macronet adsorbent and/or the imbided monomer mixture contains a carboxylic acid containing monomer, the resulting hybrid product may be converted to an amphoteric ion exchange resin by aminolysis and hydrolysis.

It is thus evident that a wide variety of adsorbents and ion exchange resins are envisaged in accordance with the invention. By selection of monomers, swelling solvents, crosslinking agents and Friedel-Crafts alkylating or acylating agents, polymers can be obtained with high surface area, high porosity, large pore size, good pore distribution, excellent physical stability and large particle size. These properties make the product suitable for liquid and gas phase separations and various other adsorbent and ion exchange applications. These include adsorption of organic materials such as phenol, carbon tetrachloride, hexane, cumene, and methyl chloroform.

We do not intend to be bound by theoretical considerations because the reasons for the exceptional adsorption capacities of the macronet polymer beads of the invention are not fully understood. Nevertheless we have observed that the best adsorbents are prepared from copolymers which exhibit the highest swelling ratios in a given solvent. For example, those copolymer beads which swell to 6—10 times their dry volume in ethylene dichloride may have adsorption capacities far exceeding those of conventional polymeric or carbon adsorbents with the same surface areas. A typical example is polymer beads prepared from styrene/divinylbenzene/acrylonitrile copolymer, monomer ratio 96/1.0/2.0, which is phase extended to macroreticular form with 28% by volume (of the organic phase) of methyl isobutyl carbinol. When swollen in ethylene dichloride and reacted under Friedel-Crafts conditions with poly-vinylchloride, the macronet product beads have a surface area of 191 $m^2/g$ but have adsorption capacity equal to that of a non-macronet polymer of similar composition having a surface area of 750 $m^2/g$. The highly swollen condition which is then made permanent by the post-crosslinking reaction, in combination with the already high porosity and/or large pores of the macroreticular substrate, provides the exceptional adsorptive behaviour characteristic of the products of the invention.

The following examples further illustrate the invention. In the examples and indeed throughout this specification and claims, unless otherwise indicated, all parts and percentages are by weight, and the divinylbenzene is commercial quality, about 50% active, balance essentially all ethyvinylbenzene. The abbreviations have the following meanings:

DVB—divinylbenzene
S—styrene
PS—polystyrene
VBC—vinylbenzyl chloride
AN—acrylonitrile
EDC—ethylene dichloride
MIBC—methylisobutyl carbinol
PVC—polyvinylchloride
CME—chloromethyl methyl ether
SA—surface area
XDC—$\alpha,\alpha$-dichloro-p-xylene
TPC—terephthaloyl chloride
MDC—methylene dichloride
NB—nitrobenzene
MR—macroreticular
DPE—diphenyl ether

Example I

A. Preparation of macroreticular copolymer beads

To a 5 $dm^3$, 4-necked flask fitted with mechanical stirrer, reflux condenser, thermometer, nitrogen inlet, heating mantel, and thermowatch assembly was charged a premixed aqueous phase consisting of 1800 g. deionized water, 20 g boric acid, 0.87 g sodium nitrite 114 g poly (diallyl dimethyl ammonium chloride) dispersant, and 12.6 g Pharmagel (trademark) gelatine protective colloid. The stirring rate was preset at 125 rpm and a slow nitrogen flow (blanket) started. With agitator off, a premixed organic phase consisting of 500 g vinylbenzene chloride, 450 g styrene, 315 g methylisobutyl carbinol (MIBC), 17.5 g of 54% divinylbenzene, 18.9 g acrylonitrile, 9.45 g benzoyl peroxide, and 0.653 g terpinoline was added. Agitation was started, the dispersion set by three on-off cycles and the mixture heated to 72°C for a period of 20 hours. The mixture was further heated to 100°C to remove MIBC through azeotropic distillation while maintaining a fluid dispersion by the addition of deionized water (0.5 $dm^3$). On cooling, the suspension copolymer beads were washed thoroughly with deionized water and oven dried at 80°C for 24 hours.

TABLE I

| Ex. | MR composition (%) | MR amount (g) | Swelling solvent $10^{-6}m^3$ | Cross-linker (g) | Catalyst (g) |
|---|---|---|---|---|---|
| 1 | S/VBC/DVB (54%)/AN 45.6/50.7/1.8/1.9 | 31.2 | EDC (300) | XDC (26.25) | $SnCl_4$ (54.0) |
| 2 | S/DVB, 97/3 | 31.2 | EDC (300) | XDC (26.5) | $SnCl_4$ (54.0) |
| 3 | S/DVB/AN, 96/2.0/2.0 | | EDC | PVC | $AlCl_3$ |
| 4 | (S/DVB/AN)[1] 96/2.0/2.0 | | EDC | CME | $SnCl_4$ |
| 5 | S/DVB, 96/4 | 10.4 | EDC (75) | XDC (17.5) | $SnCl_4$ (34.0) |
| 6 | S/DVB, 96/4 | 31.2 | EDC (300) | XDC (52.5) | $SnCl_4$ (54.0) |
| 7 | S/DVB, 96/4 | 31.2 | EDC (300) | XDC (52.5) | $SnCl_4$ (30.0) |
| 8 | S/DVB, 96/4 | 31.2 | EDC (300) | XDC (52.5) | $SnCl_4$ (15.0) |

[1] Phase extended with toluene (51.4%).

TABLE I—(continued)

| | Reaction conditions | | Analysis | | | |
|---|---|---|---|---|---|---|
| Ex. | Temp. (°C.) | Time (Hrs.) | % Cl | % S | SA ($m^2$/g.) | Porosity $m^3/m^3$ (Dry) |
| 1 | 83 | 7.5 | 3.99 | — | 1349.9 | 0.3638 |
| 2 | 83 | 8.5 | 1.66 | — | 445.2 | 0.3456 |
| 3 | 83 | 5.0 | | | 191 | |
| 4 | 85 | 5.0 | | | 733.5 | |
| 5 | 83 | 4.5 | 1.9 | — | 404.5 | 0.75 |
| 6 | 83 | 7.0 | 2.1 | — | 424.8 | 0.5086 |
| 7 | 83 | 7.5 | 1.95 | — | 367.8 | 0.6187 |
| 8 | 83 | 7.5 | 2.1 | — | 262.5 | 0.5677 |

TABLE I—(continued)

| Ex. | MR composition | MR amount (g) | Swelling solvent $10^{-6}m^3$ | Cross-linker (g) | Catalyst (g) |
|---|---|---|---|---|---|
| 9 | S/DVB, 96/4 | 31.2 | EDC (300) | XDC (52.5) | $SnCl_4$ (8.0) |
| 10 | S/DVB, 96/4 | 31.2 | EDC (300) | XDC (52.5) | $SnCl_4$ (8.0) |
| 11 | S/DVB, 96/4 | 31.2 | EDC (300) | TPC (60.9) | $SnCl_4$ (78.15) |
| 11a | S/DVB, 96/4 | 31.2 | EDC (200) | XDC (52.5) | $SnCl_4$ (15.0) |
| 12 | S/DVB, 96/4 | 31.2 | EDC (300) | XDC (26.25) | $SnCl_4$ (15.0) |
| 13 | S/DVB, 96/4 | 31.2 | NB (300) | XDC (26.25) | $AlCl_3$ (40.0) |
| 14 | S/DVB, 96/4 | 31.2 | EDC (200) NB (100) | TPC (30.45) | $AlCl_3$ (40.0) |
| 15 | S/DVB, 97/3 | 31.2 | EDC (300) | XDC (52.5) | $SnCl_4$ (54.0) |

TABLE I—(continued)

| | Reaction conditions | | Analysis | | | |
|---|---|---|---|---|---|---|
| Ex. | Temp. (°C.) | Time (Hrs.) | % Cl | % S | SA ($m^2$/g.) | Porosity $m^3/m^3$ (Dry) |
| 9 | 83 | 7.5 | 1.2 | — | 143.4 | 0.5705 |
| 10 | 83 | 24.0 | 2.5 | — | 262.1 | 0.5738 |
| 11 | 83 | 7.5 | 0.5 | — | 44.6 | 0.5262 |
| 11a | 83 | 7.5 | 2.2 | — | 394.2 | 0.4939 |
| 12 | 83 | 7.5 | 1.8 | — | 160.8 | 0.6174 |
| 13 | 90 | 7.5 | 0.72 | — | 150.9 | 0.5436 |
| 14 | 90 | 7.5 | 0.52 | — | 137.2 | 0.5324 |
| 15 | 83 | 6.5 | — | — | 441.7 | 0.3014 |

TABLE I—(continued)

| Ex. | MR composition (%) | MR amount (g.) | Swelling solvent $10^{-6}m^3$ | Cross-linker (g.) | Catalyst (g.) |
|---|---|---|---|---|---|
| 16 | S/DVB, 97/3 | 31.2 | NB (300) | TPC (30.45) | $AlCl_3$ (40.0) |
| 17 | S/DVB, 97/3 | 31.2 | EDC (300) | $S_2Cl_2$ (20.25) | $SnCl_4$ (54.0) |
| 18 | S/DVB, 97/3 | 31.2 | EDC (200) NB (100) | $S_2Cl_2$ (20.25) | $AlCl_3$ (40.0) |
| 19 | S/DVB, 97/3 | 31.2 | EDC (200) NB (150) | TPC (30.45) | $FeCl_3$ (50.0) |
| 20 | S/DVB, 97/3 | 31.2 | NB (300) | $SCl_2$ (15.45) | $AlCl_3$ (40.0) |
| 21 | S/DVB, 97/3 | 31.2 | EDC (200) NB (100) | $SCl_2$ (15.45) | $AlCl_3$ (40.0) |
| 22 | S/DVB, 97/3 | 31.2 | NB (200) | MDC 0.1 $dm^3$ | $AlCl_3$ (40.0) |
| 23 | Same as Example 1 | 31.2 | EDC (300) NB (100) | $S_2Cl_2$ (20.25) | $AlCl_3$ (40.0) |

TABLE I—(continued)

| | Reaction conditions | | Analysis | | | |
|---|---|---|---|---|---|---|
| Ex. | Temp. (°C.) | Time (Hrs.) | % Cl | % S | SA ($m.^2$/g.) | Porosity $m^3/m^3$ (Dry) |
| 16 | 90 | 8.5 | 1.10 | — | 133.2 | 0.2518 |
| 17 | 65—75 | 5.0 | 3.03 | 21.5 | 79.2 | 0.3294 |
| 18 | 78 | 7.0 | 2.59 | 19.72 | 134.1 | 0.4615 |
| 19 | 85—90 | 7.5 | 0.64 | — | 78.4 | 0.3581 |
| 20 | 20<br>4 | RT<br>85—90 | 3.78 | 8.69 | 53.5 | 0.4090 |
| 21 | 20<br>4 | RT<br>85—90 | 4.29 | 12.63 | 83.2 | 0.4572 |
| 22 | 40—50 | 7.5 | 0.06 | — | 84.0 | 0.3153 |
| 23 | 85 | 7.5 | 4.92 | 12.63 | 134.1 | 0.4615 |

TABLE I—(continued)

| Ex. | MR composition (%) | MR amount (g.) | Swelling solvent $10^{-6}m^3$ | Cross-linker (g.) | Catalyst (g.) |
|---|---|---|---|---|---|
| 24 | Same as Example 1 | 31.2 | EDC (400) | $SCl_2$ (15.45) | $SnCl_4$ (54.0) |
| 25 | Same as Example 1 | 31.2 | NB (300) | MDC 0.1 $dm^3$ | $AlCl_3$ (40.0) |
| 26 | Same as Example 1 | 31.2 | EDC (300) | XDC (26.25) | $SnCl_4$ (54.0) |
| 26a | Same as Example 1 | 31.2 | EDC (300) | XDC (26.25) | $SnCl_4$ (54.0) |
| 27 | VBC/DVB (54%) 90/10 | 50 | NB (200) | $CHCl_3$ 0.2 $dm^3$ | $AlCl_3$ (133) |
| 28 | S/DVB 97/3 | 38.53 | EDC (300) | $CHCl_3$ (110) | $AlCl_3$ (67) |
| 29 | S/DVB 97/3 | 38.53 | $CCl_4$ (300) | $C_6H_5CH_2Cl$ | $AlCl_3$ (67) |

TABLE I—(continued)

| Ex. | Reaction conditions Temp. (°C.) | Time (Hrs.) | Analysis % Cl | % S | SA ($m.^2/g.$) | Porosity $m^3/m^3$ (Dry) |
|---|---|---|---|---|---|---|
| 24 | RT<br>85 | 20<br>4 | 8.76 | 12.26 | 98.1 | 0.0827 |
| 25 | 40—50 | 7.5 | 0.95 | — | 445.1 | 0.2767 |
| 26 | 83 | 7.5 | 13.97 | — | 950.7 | 0.4124 |
| 26a | 83 | 7.5 | — | — | 920.5 | 0.4083 |
| 27 | 90 | 8.0 | — | — | 358 | — |
| 28 | 83 | 8.0 | — | — | 68 | — |
| 29 | 80 | 8.0 | — | — | 9.6 | — |

TABLE I—(continued)

| Ex. | MR composition (%) | MR amount (g.) | Swelling solvent $10^{-6}m^3$ | Cross-linker (g.) | Catalyst (g.) |
|---|---|---|---|---|---|
| 30 | (VT/DVB/AN)[2] 95/2.4/2.6 | 50 | EDC (900) | XDC (38.5) | $SnCl_4$ (114.7) |
| 31 | (VBC/DVB/AN)[3] 97/1/2 | 50 | EDC (800) | DPE (13.3) | $SnCl_4$ (86) |
| 32 | (S/DVB/AN)[4] 96.3/1.8/1.9 | 50 | EDC (800) | $CCl_4$ (73.7) | $AlCl_3$ (64.02) |

2 Phase extended with toluene (200 parts)
3 Phase extended with MIBC (498 parts)
4 Phase extended with MIBC (111.9 parts)

TABLE I—(continued)

| Ex. | Reaction conditions Temp. (°C.) | Time (Hrs.) | Analysis % Cl | % S | SA ($m.^2/g.$) | Porosity $m^3/m^3$ (Dry) |
|---|---|---|---|---|---|---|
| 30 | 82 | 5.0 | — | — | 15.6 | — |
| 31 | 82 | 5.0 | — | — | 300.7 | — |
| 32 | Reflux | 4.0 | — | — | 72.6 | — |

Performance evaluations

Certain of the macronet polymers of Table I above were evaluated for adsorption of phenol, carbon tetrachloride/Hexane, cumene- and methylchloroform. Table II reports columnar loading studies using solutions containing 6300 ppm. Phenol as compared with a commercially available /S/DVB macroreticular adsorbent not of the macronet type. It will be noted that the product of Example 1 exhibited 19% improvement in capacity over the commercial adsorbent.

TABLE II

Phenol adsorption

| Adsorbent | Capacity (g./dm$^3$) | Capacity change (g./dm$^3$) | Change (%) |
|---|---|---|---|
| Commercial S/DVB | 80 | — | — |
| Example 1 | 95 | +15 | +19 |

Certain of the macronet beads of the invention (Table I above) were also evaluated for $CCl_4$ and hexane vapor phase adsorption by determining weight gain of the resin samples subjected to an environment of an excess of either adsorbate in hexadecane in a closed container for 24 hours. Table III reports the results as wt.% $CCl_4$ or hexane adsorbed as compared with three brands of activated carbon and three types of commercially available S/DVB adsorbent resins not of the macronet type. It will be noted that certain of the adsorbents of the invention proved to be better than the carbon adsorbents.

TABLE III

$CCl_4$/Hexane adsorption

| Adsorbent | Wt. % $CCl_4$ | Wt. % Hexane |
|---|---|---|
| BPC Activated Carbon | 60—65 | 25 |
| Witco 517 Activated Carbon | 60 | 28 |
| PCB Activated Carbon | 60 | — |
| Commercial S/DVB | 56 | 28.1 |
| Example 1 | 97 | 42 |
| Example 26 | 91 | 42 |
| Example 2 | 51 | 24 |
| Example 11a | 52 | 24 |
| Example 31 | 68.8 | 25.6 |
| Example 4 | 79.8 | 38.0 |

Table IV reports column loading for cumene and methylchloroform in the vapor phase as compared with a commercially available S/DVB non-macronet adsorbent. It will be noted that the Example 4 sample adsorbed cumene more than 90%. In the methylchloroform loading studies, the Example 2 sample gave 84% pickup and the Example 26 sample gave 94% pickup. In the same studies it will be noted that adsorption from a high concentration adsorbate ($C_0$=369,500 ppm.) was also excellent.

TABLE IV

Cumene/Methylchloroform (MCF) adsorption

| Adsorbent | Sample wt. (g.) | | $C_0$ (ppm.)[1] | |
|---|---|---|---|---|
| Example | MCF | Cumene | MCF | Cumene |
| 26 | 0.5017 | — | 23,100 | — |
| 2 | 0.4639 | — | 23,100 | — |
| 26a | 0.5018 | — | 23,100 | — |
| Commercial S/DVB (Control) | — | — | 23,100 | — |
| 26a | 3.0013 | — | 369,500 | — |
| 4 | 3.0016 | — | 369,500 | — |
| Commercial S/DVB (Control) | — | — | 369,500 | — |
| 26a | — | 3.0006 | — | 703.870 |
| 32 | — | 3.0024 | — | 703,870 |
| 3 | — | 3.0028 | — | 703,870 |
| 4 | — | 5.0017 | — | 1,353,600 |
| Commercial S/DVB (Control) | — | — | — | 703,870 |

[1] Initial concentration of adsorbate

TABLE IV—(continued)

Cumene/Methylchloroform (MCF) adsorption

| Adsorbent | Ceq. (ppm.)[2] | | Capacity (mg./g.) | |
|---|---|---|---|---|
| Example | MCF | Cumene | MCF | Cumene |
| 26 | 112 | — | 65 | — |
| 2 | 3847 | — | 59 | — |
| 26a | 700 | — | 63 | — |
| Commercial S/DVB (Control) | 110 | — | 30 | — |
| 26a | 2880 | — | 174 | — |
| 4 | 2880 | — | 170 | — |
| Commercial S/DVB (Control) | 2000 | — | 100 | — |
| 26a | — | 570 | — | 300 |
| 32 | — | 460 | — | 300 |
| 3 | — | 1160 | — | 300 |
| 4 | — | 1168 | — | 350 |
| Commercial S/DVB (Control) | — | 1160 | — | 380 |

[2] Concentration of adsorbate at equilibrium after treatment with adsorbent.

## Claims

1. A synthetic polymeric adsorbent comprising crosslinked macroreticular copolymer beads containing units of aromatic monomer and 0.25 to 20% by weight crosslinker units, characterised in that after formation the beads are swollen and, while in a swollen state are crosslinked with one or more of the following crosslinkers: polyfunctional alkylating agents, polyfunctional acylating agents, sulfur halides.

2. An adsorbent as claimed in Claim 1 wherein the aromatic copolymer is a copolymer of styrene and divinylbenzene and/or vinylbenzylchloride and, optionally acrylonitrile.

3. An adsorbent as claimed in any preceding claim wherein the crosslinker is one or more of the following: sulfur monochloride, sulfur dichloride, $\alpha,\alpha$-dichloro-p-xylene, terephthaloyl chloride, polyfunctional alkylating agents having halogen, hydroxy, olefin and/or epoxy functionality.

4. An ion exchange resin comprising synthetic polymeric beads as claimed in any preceding claim carrying ion exchange functional groups.

5. A process for making a synthetic polymeric adsorbent characterised in that macroreticular copolymer beads containing units of aromatic monomer and 0.25 to 20% by weight crosslinker units are swollen in an inert organic solvent and the swollen beads are crosslinked in the presence of Friedel-Crafts catalyst, with one or more of the following crosslinkers: polyfunctional alkylating agents, polyfunctional acylating agents, sulfur halides.

6. A process as claimed in Claim 5 as applied to the preparation of adsorbent as claimed in any one of Claims 2 to 4.

7. A process for the preparation of ion exchange resin which comprises carrying out a process as claimed in Claim 5 or 6 and treating the beads so produced to impart ion exchange functional groups thereto.

8. A process for removing a dissolved component from a fluid by adsorption which comprises contacting the fluid with adsorbent as claimed in any of Claims 1 to 3.

**Patentansprüche**

1. Synthetisches polymeres Adsorbens aus vernetzten makroretikularen Copolymerkügelchen, die aromatische Monomereinheiten und 0,25 bis 20 Gew.-% Vernetzungsmitteleinheiten enthalten, dadurch gekennzeichnet, daß nach der Bildung die Kügelchen gequollen werden und in gequollenem Zustand mit einem oder mehreren der folgenden Vernetzungsmittel vernetzt werden: polyfunktionellen Alkylierungsmittel, polyfunktionellen Acylierungsmitteln sowie Schwefelhalogeniden.

2. Adsorbens nach Anspruch 1, dadurch gekennzeichnet, daß das aromatische Copolymer ein Copolymeres aus Styrol und Divinylbenzol und/oder Vinylbenzylchlorid sowie gegebenenfalls Acrylnitril ist.

3. Adsorbens nach einem der vorhergehenden Ansprüche, dadurch gekennzeichnet, daß das Vernetzungsmittel aus einem oder mehreren der folgenden besteht: Schwefelmonochlorid, Schwefeldichlorid, $\alpha,\alpha$-Dichloroxylen, Terephthaloylchlorid sowie polyfunktionellen Alkylierungsmitteln mit Halogen-, Hydroxy-, Olefin- und/oder Epoxy-Funktionalität.

4. Ionenaustauscherharz aus synthetischen polymeren Kügelchen gemäß einem der vorhergehenden Ansprüche, welche funktionelle Ionenaustauschergruppen tragen.

5. Verfahren zur Herstellung eines synthetischen Polymeren Adsorbenses, dadurch gekennzeichnet, daß makroretikulare Copolymerkügelchen, die aromatische Monomereinheiten und 0,25 bis 20 Gew.-% Vernetzungsmitteleinheiten enthalten, in einem inerten organischen Lösungsmittel gequollen werden und die gequollenen Kügelchen in Gegenwart eines Friedel-Crafts-Katalysators mit einem oder mehreren der folgenden Vernetzungsmittel vernetzt werden: polyfunktionellen Alkylierungsmitteln, polyfunktionellen Acylierungsmitteln sowie Schwefelhalogeniden.

6. Verfahren nach Anspruch 5, dadurch gekennzeichnet, daß es auf die Herstellung eines Adsorbenses gemäß einem der Ansprüche 2 bis 4 angewendet wird.

7. Verfahren zur Herstellung eines Ionenaustauscherharzes, dadurch gekennzeichnet, daß ein Verfahren gemäß Anspruch 5 oder 6 durchgeführt wird und die auf diese Weise behandelten Kügelchen in der Weise behandelt werden, daß sie mit funktionellen Ionenaustauschergruppen versehen werden.

8. Verfahren zur Entfernung einer gelösten Komponente aus einem Fluid durch Adsorption, dadurch gekennzeichnet, daß das Fluid mit einem Adsorbens nach einem der Ansprüche 1 bis 3 kontaktiert wird.

**Revendications**

1. Adsorbant polymère synthétique comprenant des perles de copolymère macroréticulaire réticulé contenant des motifs de monomère aromatique et 0,25 à 20 % en poids de motifs de réticulant, caractérisé en ce qu'après leur formation on fait gonfler les perles et, alors qu'elles sont à l'état gonflé, on les réticule avec un ou plusieurs des réticulants suivants: agents d'alkylation polyfonctionnels, agents d'acylation polyfonctionnels, halogénures de soufre.

2. Adsorbant comme revendiqué dans la revendication 1, dans lequel le copolymère aromatique est un copolymère de styrène et de divinylbenzène et/ou de chlorure de vinylbenzyle et, éventuellement, d'acrylonitrile.

3. Adsorbant comme revendiqué dans l'une quelconque des revendications précédentes, dans lequel le réticulant est un ou plusieurs des suivants: le monochlorure de soufre, le dichlorure de soufre, l'$\alpha,\alpha$-dichloro-o-xylène, le chlorure de téréphtaloyle, les agents d'alkylation polyfonctionnels ayant une fonctionnalité halogène, hydroxy, oléfine et/ou époxy.

4. Résine échangeuse d'ions comprenant des perles polymères synthétiques comme revendiqué dans l'une quelconque des revendications précédentes portant des groupes fonctionnels échangeurs d'ions.

5. Procédé pour préparer un adsorbant polymère synthétique, caractérisé en ce que l'on fait gonfler des perles de copolymère macroréticulaire contenant des motifs de monomère aromatique et

0,25 à 20 % en poids de motifs de réticulant dans un solvent organique inerte et on réticule les perles gonflées en présence d'un catalyseur de Friedel-Crafts, avec un ou plusieurs des réticulants suivants: agents d'alkylation polyfonctionnels, agents d'acylation polyfonctionnels, halogénures de soufre.

6. Procédé selon la revendication 5 appliqué à la préparation d'un adsorbant comme revendiqué dans l'une quelconque des revendications 2 à 4.

7. Procédé pour la préparation d'une résine échangeuse d'ions qui comprend la mise en pratique d'un procédé comme revendiqué dans la revendication 5 ou 6 et le traitement des perles ainsi produites pour leur conférer des groupes fonctionnels échangeurs d'ions.

8. Procédé pour éliminer un composant dissous d'un fluide par adsorption qui comprend le contact du fluide avec un adsorbant comme revendiqué dans l'une quelconque des revendications 1 à 3.